# EUROPEAN PATENT APPLICATION

(11) **EP 4 818 351 A1**
(43) Date of publication of application: **07.10.2026**
(21) Application number: 25907388.0
(22) Date of filing: 18.11.2025
(51) Int. Cl.: C22C 38/04, C22C 38/02, C22C 38/06, C21D 9/50, B23K 11/04, B23K 11/16

(54) **FLASH BUTT WELDING MEMBER, FLASH BUTT WELDING METHOD, AND COMPONENT**

(30) Priority: 17.12.2024 KR 20240189348
(71) Applicant: POSCO Co., Ltd, Gyeongsangbuk-do 37859 (KR)
(72) Inventor: BAE, Gyu-Yeol, Incheon 21985 (KR); HAN, Do-Kyeong, Incheon 21985 (KR)
(74) Representative: Meissner Bolte Partnerschaft mbB
(86) International application number: PCT/KR2025/019072
(87) International publication number: WO 2026/134712

(57) **Abstract**

The present disclosure relates to a flash butt welded member, flash butt welding, and a component. An aspect of the present disclosure is to provide a flash butt welded member, a flash butt welding method, and a component.

## Description

### Technical Field

The present disclosure relates to a flash butt welded member, a flash butt welding method, and a component.

### Background Art

Globally, as part of carbon-neutral policies for environmental friendliness, with the increasing adoption of eco-friendly automobiles, weight reduction has become particularly essential for improving automobile driving fuel efficiency. Even in the commercial vehicle market, in line with the recent expansion of the above-described environmentally friendly policies, development of lighter wheels for improving fuel efficiency and the like has continued. Conventionally, 34 kg-class wheels using 590 MPa-class steel materials were the main products in the market, but recently, 28 kg-class wheels using 780 MPa-class steel materials have been developed, and gradual market penetration and wider application are expected.

Meanwhile, in the case of ultra-lightweight wheels for commercial vehicles, from the perspective of driving safety, a thickness of a wheel disc is maintained, while lightweight design of the part is mainly achieved by reducing a thickness of a wheel rim. At present, the highest-strength steel material mainly used as a steel material for wheel rims is a 780 MPa-class steel material, and there is a limitation in that, when a steel material having a strength higher than 780 MPa is used, formability deteriorates.

Meanwhile, it is possible to manufacture an ultra-lightweight wheel of a 1.5 GPa class through final heat treatment after joining base materials of a 590 MPa-class steel material and then forming the joined base materials into a component shape. In the joining, a joint is formed using flash butt welding, and under general welding heat cycle conditions, there is a limitation in that, because brittleness of the joint increases due to rapid cooling, forming cracks and sensitivity to hydrogen embrittlement greatly increase during the part manufacturing process.

Accordingly, there is a need to develop a flash butt welded member having excellent formability and hydrogen embrittlement resistance, and a component using the same.

### [Related Art Document]

(Patent Document) Korean Patent Publication No. 10-2178723

### Summary of Invention

### Technical Problem

An aspect of the present disclosure is to provide a flash butt welded member, a flash butt welding method, and a component.

A preferred aspect of the present disclosure is to provide a flash butt welded member, a flash butt welding method, and a component that may achieve excellent formability and hydrogen embrittlement resistance.

The object of the present disclosure is not limited to the above description. Those skilled in the art to which the present disclosure pertains will have no difficulty in understanding additional objects of the present disclosure from the overall contents of the present specification.

### Solution to Problem

According to an aspect of the present disclosure, a flash butt welded member includes: a base material; and a welded portion obtained by flash butt welding the base material, wherein the base material contains, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities, carbides distributed in the welded portion have an average diameter of 180 nm or less and an aspect ratio of 2.5 or less, and the welded portion has a kernel average misorientation (KAM) value of 2.50 or less.

The welded portion may contain η-carbide that is a metastable carbide.

The welded portion may have a maximum Goss fiber intensity value of 10.0 or less.

The welded portion may include a coarse grain heat-affected zone formed at a central portion in a width direction and a fine grain heat-affected zone formed to surround the coarse grain heat-affected zone, and the coarse grain heat-affected zone may have an average prior-austenite grain size of 20 µm or more.

The welded member may have a thickness of 2 to 20 mm.

The welded portion may have an average hardness of 200 to 400 Hv.

The welded portion may have a tensile strength of 1,200 MPa or less and a yield strength of 620 MPa or less.

The welded portion may have an elongation of 4.0% or more.

The welded portion may have an average length of cracks of 310 µm or less, the cracks being generated after four-point bending at 150% or more of a yield strength of the base material and immersion in a 0.1 N HCl solution for 120 hours.

According to another aspect of the present disclosure, a flash butt welding method includes: preparing a base material containing, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities; preheating a surface to be welded, of the base material, so that a movement distance between electrodes is 1.0 to 12.0 mm; flash-heating the preheated surface to be welded so that a flash speed is 5 to 25% and the movement distance between the electrodes is 2.0 to 6.0 mm; upset-heating the flash-heated surface to be welded so that a current is 20 to 40% of a short-circuit current and the movement distance between the electrodes is 2.0 to 16.0 mm, and forming a welded portion by flash butt welding; and after cooling the welded portion, post-heating the cooled welded portion for 0.5 to 2.5 seconds with a current of 5 to 25% of the short-circuit current.

According to still another aspect of the present disclosure, a component includes: a base material containing, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities; and a welded portion obtained by flash butt welding the base material and then subjecting the flash butt-welded base material to post-heat treatment, wherein the welded portion includes a soft portion formed in a thickness direction, and an average hardness (H1) of the base material and an average hardness (H2) of the soft portion satisfy the following Relational Expression 1. [Relational Expression 1] $H 1 - H 2 \leq 110 Hv$

A carbon content of the base material and a carbon content of the soft portion may satisfy the following Relational Expression 2. [Relational Expression 2] $α - β \leq 0.1 wt %$ (where α is the carbon content (wt%) of the base material, and β is the carbon content (wt%) of the soft portion.)

The base material may have a tensile strength of 1,000 to 2,000 MPa.

The soft portion may have a width of 10% or less of a thickness of the base material.

### Advantageous Effects of Invention

According to an aspect of the present disclosure, a flash butt welded member, a flash butt welding method, and a component may be provided.

According to a preferred aspect of the present disclosure, a flash butt welded member, a flash butt welding method, and a component that may achieve excellent formability and hydrogen embrittlement resistance may be provided.

### Brief Description of Drawings

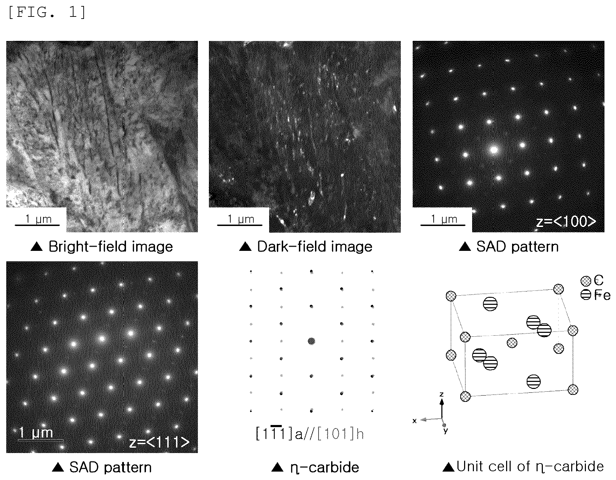

FIG. 1 exhibits results obtained by capturing bright-field and dark-field images of Inventive Example 2 using a transmission electron microscope (TEM) and confirming, through selected area diffraction (SAD or SAED) pattern analysis, that the unit cell crystal structure is consistent with that of η-carbide that is a metastable carbide.

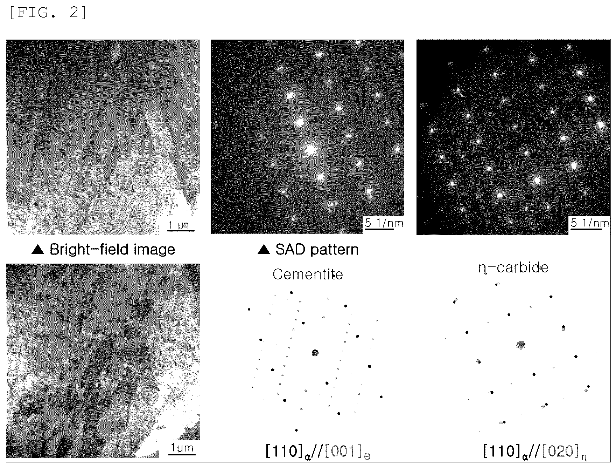

FIG. 2 exhibits results obtained by capturing a bright-field image of Comparative Example 2 using a transmission electron microscope (TEM) and confirming, through selected area diffraction (SAD or SAED) pattern analysis, that the unit cell crystal structure is consistent with those of cementite and η-carbide that is a metastable carbide.

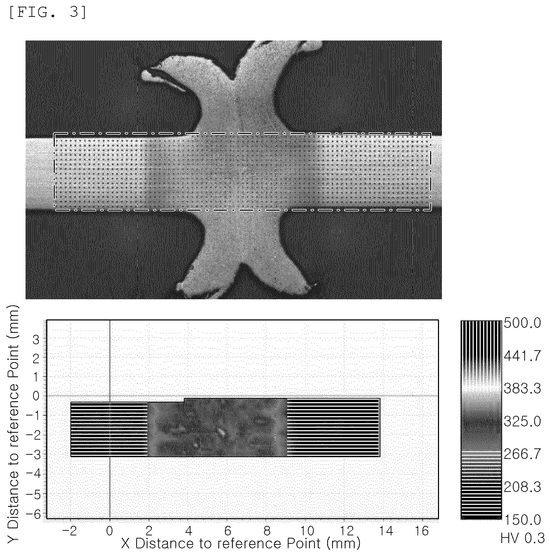

FIG. 3 is an image showing, for Inventive Example 2 before post-heat treatment, a cross-sectional optical micrograph after hardness measurement of a flash butt welded portion including a steel sheet base material, and a hardness distribution corresponding to a rectangular box region represented by color differences.

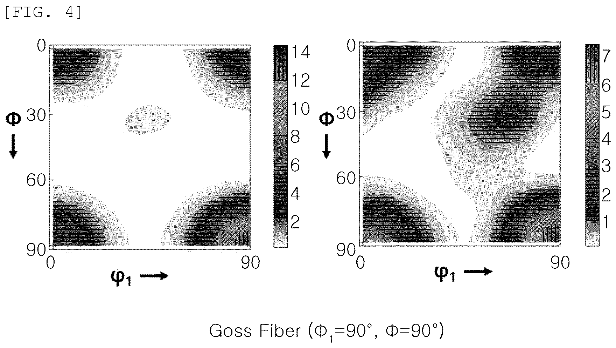

FIG. 4 is an image showing Goss fiber intensity measured in a transverse direction (TD) of the flash butt welded portions of Comparative Example 2 (left) and Inventive Example 2 (right) before post-heat treatment.

### Best Mode for Invention

Hereinafter, preferred embodiments in the present disclosure will be described. However, the embodiments in the present disclosure may be modified in various other forms, and the scope of the present disclosure is not limited to the embodiments described below.

In addition, the embodiments in the present disclosure are provided to more fully describe the present disclosure to those skilled in the art.

In describing embodiments in the present disclosure, when it is determined that a detailed description of known technology related to the present disclosure may unnecessarily obscure the gist of the present disclosure, the detailed description thereof will be omitted. In addition, the terms to be described below are terms defined in consideration of functions in the present disclosure, and may vary depending on the intent or custom of a user or an operator. Accordingly, the definitions of such terms should be understood based on the contents throughout the present specification. Terms used in the detailed description are only for describing embodiments in the present disclosure and should never be construed as limiting. Unless clearly indicated otherwise, an expression in the singular form includes the meaning of the plural form.

In the present description, expressions such as "comprise" and "include" are intended to refer to certain features, numbers, steps, operations, elements, parts thereof, or combinations thereof, and should not be construed as excluding the presence or possibility of one or more other features, numbers, steps, operations, elements, parts thereof, or combinations thereof in addition to those described.

Unless otherwise specifically defined in the specification of the present disclosure, % refers to wt%.

Hereinafter, the present disclosure will be described in detail through each embodiment or example of the present disclosure. It should be noted that each embodiment or example described in the present specification is not limited to description only for one embodiment or example, and may also be combined with other embodiments or examples. Accordingly, citation of claims in the claims is merely one example of an embodiment, and the technical idea of the present disclosure should not be construed as being limited only to combinations with the cited claims, and combinations with various claims are also included within the scope of the technical idea of the present disclosure.

Hereinafter, a flash butt welded member according to an embodiment in the present disclosure will be described.

The flash butt welded member according to an embodiment in the present disclosure includes a base material and a welded portion obtained by flash butt welding the base material. In the present disclosure, the form of the welded member is not particularly limited, but, as an example, the welded member may have a form of a steel pipe or a rectangular pipe.

The base material may contain, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities.

### C: 0.180 to 0.40%

C is an element essential for ensuring the strength of martensite and is an element that is necessarily added to control the strength of a steel sheet because it increases the strength of a heat-treated member and improves hardenability. When a content of C is less than 0.180%, sufficient martensite may not be secured due to insufficient hardenability when a cooling rate decreases, and a ferrite structure may develop, resulting in reduced strength and deteriorated crashworthiness of a component manufactured from the steel sheet. When the content of C exceeds 0.40%, the impact toughness of a slab may be reduced, the strength of the heat-treated member may become excessively high, and weldability may deteriorate. Accordingly, the content of C is advantageously in a range of 0.180 to 0.40%. A lower limit of the content of C is more advantageously 0.190%, still more advantageously 0.20%, and most advantageously 0.210%. An upper limit of the content of C is more advantageously 0.39%, still more advantageously 0.38%, and most advantageously 0.37%.

### Si: 1.0% or less (excluding 0%)

Si, which is a solid-solution strengthening element and a carbide formation-suppressing element, is added not only as a deoxidizer in steelmaking, but also for effective homogenization of the internal structure of a steel sheet and for increasing the strength of a heat-treated member. When a content of Si exceeds 1.00%, Si-based oxides may be excessively formed on a surface of the steel sheet, causing surface quality and properties to deteriorate. Accordingly, the content of Si is advantageously in a range of 1.0% or less. The content of Si is more advantageously 0.90% or less, still more advantageously 0.80% or less, and most advantageously 0.70% or less. Meanwhile, because Si may have a sufficient effect even in a trace amount, a lower limit thereof is not particularly limited. However, as an example, the lower limit of the content of Si may be 0.10%.

### Mn: 1.60% or less (excluding 0%)

Mn is an element added not only to ensure desired strength due to a solid-solution strengthening effect, but also to suppress undesired ferrite or bainite transformation during heat treatment. When a content of Mn exceeds 1.60%, the manufacturing cost of a steel sheet may increase, and a banded structure aligned in a rolling direction may excessively develop in the microstructure, thereby causing non-uniformity in the internal structure of the steel sheet, such that crashworthiness may deteriorate. Accordingly, the content of Mn is advantageously in a range of 1.60% or less. The content of Mn is more advantageously 1.50% or less, still more advantageously 1.40% or less, and most advantageously 1.30% or less. Meanwhile, because Mn may have a sufficient effect even in a trace amount, a lower limit thereof is not particularly limited. However, as an example, the lower limit of the content of Mn may be 0.10%.

### B: 0.010% or less (excluding 0%)

B is an element added to suppress formation of ferrite in a heat-treated member, to improve hardenability even with a small amount of addition, and to suppress brittleness of the heat-treated member caused by grain boundary segregation of P or S by segregating at prior-austenite grain boundaries. When a content of B exceeds 0.010%, the effect of B may become saturated, and B may segregate at grain boundaries and cause brittleness, thereby significantly deteriorating hot rolling properties of a slab. Accordingly, the content of B is advantageously in a range of 0.010% or less. The content of B is more advantageously 0.0080% or less, still more advantageously 0.0060% or less, and most advantageously 0.0040% or less. Meanwhile, because B may have a sufficient effect even in a trace amount, a lower limit thereof is not particularly limited. However, as an example, the lower limit of the content of B may be 0.0010%.

The remaining component is iron (Fe). However, in a typical manufacturing process, unintended impurities may unavoidably be introduced from raw materials or the surrounding environment, and thus such impurities cannot be excluded. Since these impurities are readily understood by those skilled in the typical manufacturing process, all details thereof are not specifically mentioned in the present specification.

Carbides distributed in the welded portion may have an average diameter of 180 nm or less and an aspect ratio of 2.5 or less. When the average diameter of the carbides exceeds 180 nm, the toughness of the joint may be reduced, such that the joint may be sensitive to forming cracks, and hydrogen embrittlement resistance may also be relatively poor due to the reduction in toughness of the joint. The average diameter of the carbides is advantageously 165 nm or less, more advantageously 145 nm or less, and most advantageously 125 nm or less. Because a smaller average diameter of the carbides is more advantageous, a lower limit thereof is not particularly limited in the present disclosure. However, as an example, the lower limit of the average diameter of the carbides may be 50 nm. When the aspect ratio of the carbides exceeds 2.5, as described above, the toughness of the joint may be reduced, such that the joint may be sensitive to forming cracks, and hydrogen embrittlement resistance may also be relatively poor due to the reduction in toughness of the joint. This is because the carbides distributed in the joint have a shape in which stress is relatively difficult to be dispersed during a forming process, thereby making forming cracks more likely to occur at local stress concentration sites. In fact, when a fracture surface of the joint in which forming cracks have occurred is closely observed at high magnification through a scanning electron microscope (SEM), it can be confirmed that a number of cracks occur at an interface between acicular cementite having a relatively large aspect ratio value and a matrix. The aspect ratio of the carbides is advantageously 2.4 or less, more advantageously 2.3 or less, and most advantageously 2.2 or less. Because a smaller aspect ratio of the carbides is more advantageous, a lower limit thereof is not particularly limited in the present disclosure. However, as an example, the lower limit of the aspect ratio of the carbides may be 1.0. Meanwhile, in the present disclosure, the type of the carbides is not particularly limited, but, as an example, the carbides may be cementite.

The welded portion may have a kernel average misorientation (KAM) value of 2.50 or less. When the KAM value exceeds 2.50, a dislocation density in a microstructure of the joint is relatively high, resulting in deteriorated formability of the joint. In addition, because dislocations do not trap hydrogen as strongly as fine carbide precipitates and hydrogen may thus move more easily, the hydrogen embrittlement resistance of the joint may deteriorate. The KAM value is advantageously 2.4 or less, more advantageously 2.3 or less, and most advantageously 2.2 or less. Because a smaller KAM value is more advantageous, a lower limit thereof is not particularly limited in the present disclosure. However, as an example, the lower limit of the KAM value may be 0.5. Meanwhile, a dislocation density in a grain may be evaluated by a kernel average misorientation (KAM) value. The KAM value refers to an average value of crystal rotation amount (crystal misorientation) between a target measurement point and measurement points around the target measurement point, and a larger value indicates that more deformation is present in a crystal and the dislocation density is higher.

The welded portion may contain η-carbide that is a metastable carbide. By containing η-carbide, which is a metastable carbide in a fine spherical form as compared with ordinary cementite, stress may be more effectively dispersed during a forming process and a matrix may be strengthened, such that the toughness of the joint may be improved and, accordingly, the hydrogen embrittlement resistance of the joint may also be improved.

The welded portion may have a maximum Goss fiber intensity value of 10.0 or less. When the maximum Goss fiber intensity value exceeds 10.0, a texture having an orientation unfavorable for formability may develop, leading to deteriorated formability of the joint. The maximum Goss fiber intensity value is advantageously 9.9 or less, more advantageously 9.8 or less, and most advantageously 9.7 or less. Because a smaller maximum Goss fiber intensity value is more advantageous, a lower limit thereof is not particularly limited in the present disclosure. However, as an example, the lower limit of the maximum Goss fiber intensity value may be 2.50. Meanwhile, compared with a case in which the texture has no orientation, the Goss fiber intensity means a relative volume fraction of grains having a specific orientation of Euler angles (90°, 90°, 45°) in an orientation distribution function (ODF), which is an orientation distribution function of the texture. For example, when this value is 2.0, it means that the Goss fiber texture has developed to a level twice that in the above-described case of a texture without orientation.

The welded portion may include a coarse grain heat-affected zone (CGHAZ) formed at a central portion in a width direction and a fine grain heat-affected zone (FGHAZ) formed to surround the coarse grain heat-affected zone, and the coarse grain heat-affected zone may have an average prior-austenite grain size of 20 µm or more. When the average prior-austenite grain size of the coarse grain heat-affected zone is less than 20 µm, the toughness of the joint may be relatively insufficient and brittleness may increase, leading to deteriorated formability. In addition, as the grain size decreases, the number of boundaries present within grains, at which hydrogen may be trapped, is relatively reduced, leading to deteriorated hydrogen embrittlement resistance of the joint. The average prior-austenite grain size of the coarse grain heat-affected zone is advantageously 22 µm or more, more advantageously 24 µm or more, and more advantageously 26 µm or more. Because a larger average prior-austenite grain size of the coarse grain heat-affected zone is more advantageous, an upper limit thereof is not particularly limited in the present disclosure. However, as an example, the upper limit of the average prior-austenite grain size of the coarse grain heat-affected zone may be 40 µm.

The flash butt welded member of the present disclosure may have a thickness of 2 to 20 mm. When the thickness of the welded member is less than 2 mm, it may be difficult to ensure sufficient strength and durability due to excessive thinning of the heat-treated member. When the thickness of the welded member exceeds 20 mm, it may be difficult to ensure sufficient hardenability of the heat-treated member. A lower limit of the thickness of the welded member is advantageously 2.2 mm, more advantageously 2.6 mm, and most advantageously 3.0 mm. An upper limit of the thickness of the welded member is advantageously 18 mm, more advantageously 16 mm, and most advantageously 10 mm.

The flash butt welded member of the present disclosure may have an average hardness of the welded portion of 200 to 400 Hv. The welded portion may have a tensile strength of 1,200 MPa or less and a yield strength of 620 MPa or less. The welded portion may have an elongation of 4.0% or more. In the present disclosure, a lower limit of the tensile strength is not particularly limited, but, as an example, the lower limit may be 700 MPa. In the present disclosure, a lower limit of the yield strength is not particularly limited, but, as an example, the lower limit may be 500 MPa. In the present disclosure, an upper limit of the elongation is not particularly limited, but, as an example, the upper limit may be 10%.

The welded portion may have an average length of cracks of 310 µm or less, the cracks being generated after four-point bending at 150% or more of a yield strength of the base material and immersion in a 0.1 N HCl solution for 120 hours. In the present disclosure, a lower limit of the average length of the cracks is not particularly limited, but, as an example, the lower limit may be 10 µm.

Hereinafter, a flash butt welding method according to an embodiment in the present disclosure will be described.

First, a base material satisfying the above-described alloy composition is prepared. In the present disclosure, the preparation process of the base material is not particularly limited, and any method used in the art may be used.

Thereafter, a surface to be welded, of the base material, is preheated. The preheating may be controlled so that a movement distance between electrodes is 1.0 to 12.0 mm. When the movement distance between the electrodes during the preheating is less than 1.0 mm, preheating of the steel sheet base material may be insufficient, such that brittleness of the joint due to rapid cooling may increase. When the movement distance between the electrodes during the preheating exceeds 5.0 mm, preheating of the steel sheet base material may be excessive, such that properties of the joint may deteriorate due to grain growth in the microstructure of the joint. A lower limit of the movement distance between the electrodes during the preheating is advantageously 1.2 mm, more advantageously 1.6 mm, and most advantageously 1.8 mm. An upper limit of the movement distance between the electrodes during the preheating is advantageously 11.5 mm, more advantageously 11.0 mm, and most advantageously 10.5 mm.

Thereafter, the preheated surface to be welded is subjected to flash-heating. The flash-heating may be controlled so that a flash speed is 5 to 25% and the movement distance between the electrodes is 2.0 to 6.0 mm. When the flash speed is less than 5%, a flash heating rate in a flash section may be too slow, such that a heat input to the joint may be excessive. When the flash speed exceeds 25%, the flash heating rate in the flash section may become too fast, such that the heat input to the joint may be insufficient. A lower limit of the flash speed is advantageously 6%, more advantageously 8%, and most advantageously 10%. An upper limit of the flash speed is advantageously 24%, more advantageously 22%, and most advantageously 20%. Meanwhile, the flash speed refers to a rate at which a gap between the electrodes is reduced per second relative to an initial gap between the electrodes in the flash section. When the movement distance between the electrodes during the flash-heating is less than 2.0 mm, flash-heating of the steel sheet base material may be insufficient, such that the strength of the joint may be insufficient. When the movement distance between the electrodes during the flash-heating exceeds 6.0 mm, flash-heating of the steel sheet base material may be excessive, such that properties of the joint may deteriorate due to grain growth in the microstructure of the joint. A lower limit of the movement distance between the electrodes during the flash-heating is advantageously 2.2 mm, more advantageously 2.4 mm, and most advantageously 2.6 mm. An upper limit of the movement distance between the electrodes during the flash-heating is advantageously 5.8 mm, more advantageously 5.6 mm, and most advantageously 5.4 mm.

Thereafter, the flash-heated surface to be welded is subjected to upset-heating, and flash butt welding is performed to form a welded portion. The upset-heating may be performed with a current equal to 20 to 40% of a short-circuit current, and may be controlled so that the movement distance between the electrodes is 2.0 to 16.0 mm. When the current during the upset-heating is less than 20% of the short-circuit current, the joint may be relatively sensitive to rapid cooling, such that discharge of the molten portion may not be maximized, and the brittleness of the joint may increase. When the current during the upset-heating exceeds 40% of the short-circuit current, a cooling rate of the joint may increase excessively, such that properties of the joint may deteriorate due to grain growth in the microstructure of the joint. A lower limit of the current during the upset-heating is advantageously 22% of the short-circuit current, more advantageously 24% of the short-circuit current, and most advantageously 26% of the short-circuit current. An upper limit of the current during the upset-heating is advantageously 38% of the short-circuit current, more advantageously 36% of the short-circuit current, and most advantageously 34% of the short-circuit current. When the movement distance between the electrodes during the upset-heating is less than 2.0 mm, the upset-heating and the upset amount may be insufficient, such that the strength and the like of the joint may be insufficient. When the movement distance between the electrodes during the upset-heating exceeds 16.0 mm, the upset-heating and the upset amount may be excessive, such that the formability and the like of the joint may deteriorate. A lower limit of the movement distance between the electrodes during the upset-heating is advantageously 2.2 mm, more advantageously 2.4 mm, and most advantageously 2.6 mm. An upper limit of the movement distance between the electrodes during the upset-heating is advantageously 15.8 mm, more advantageously 15.6 mm, and most advantageously 15.4 mm.

Thereafter, after the welded portion is cooled, the cooled welded portion is subjected to post-heating. The post-heating may be performed with a current of 5 to 25% of the short-circuit current for 0.5 to 2.5 seconds. When the current during the post-heating is less than 5% of the short-circuit current, the amount of post-heating applied to the joint may be insufficient, such that the effect of alleviating brittleness of the joint by the post-heating may be insufficient. When the current during the post-heating exceeds 25% of the short-circuit current, the amount of post-heating applied to the joint may be excessive, such that the strength of the joint may be insufficient due to softening of the joint by the post-heating. A lower limit of the current during the post-heating is advantageously 6% of the short-circuit current, more advantageously 8% of the short-circuit current, and most advantageously 10% of the short-circuit current. An upper limit of the current during the post-heating is advantageously 24% of the short-circuit current, more advantageously 22% of the short-circuit current, and most advantageously 20% of the short-circuit current. When the time during the post-heating is less than 0.5 seconds, the effect of the post-heating may be insufficient, such that the effect of improving toughness of the joint may be insufficient. When the time during the post-heating exceeds 2.5 seconds, the post-heating may be excessive, such that the strength of the joint may be insufficient, or the brittleness of the joint may rather increase. A lower limit of the time during the post-heating is advantageously 0.6 seconds, more advantageously 0.7 seconds, and most advantageously 0.8 seconds. An upper limit of the time during the post-heating is advantageously 2.4 seconds, more advantageously 2.2 seconds, and most advantageously 2.0 seconds.

Hereinafter, a component according to an embodiment in the present disclosure will be described. In the present disclosure, although not particularly limited, as an example, the part may be manufactured using a welded member having the above-described features.

A component according to an embodiment in the present disclosure includes a base material containing, by wt%, 0.180 to 0.40% of C, 0.60% or less of Si (excluding 0%), 1.40% or less of Mn (excluding 0%), 0.010% or less of B (excluding 0%), and a balance of Fe and unavoidable impurities, and a welded portion obtained by subjecting the base material to post-heat treatment after flash butt welding the base material. The post-heat treatment is distinguished from the post-heating in the above-described flash butt welding method.

The welded portion may include a soft portion formed in a thickness direction. The soft portion is an area adjacent to a molten portion formed during manufacture of the welded member. The molten portion is discharged outward during an upset process in a state having relatively high carbon solubility. At this time, as carbon in the area adjacent to the molten portion escapes into the molten portion, the carbon content may become relatively low, and eventually hardenability may be insufficient as compared with the base material. In addition, durability and impact resistance of a component manufactured from a welded member having a soft portion with inferior hardenability may also deteriorate.

However, according to the manufacturing process of the present disclosure, an average hardness (H1) of the base material and an average hardness (H2) of the soft portion may satisfy the following Relational Expression 1. H1-H2 is advantageously 108 Hv or less, more advantageously 104 Hv or less, and most advantageously 100 Hv or less. Because a smaller H1-H2 is more advantageous, a lower limit thereof is not particularly limited in the present disclosure. However, as an example, the lower limit of H1-H2 may be 10 Hv. In addition, H1 may be greater than H2.
[Relational Expression 1] $H 1 - H 2 \leq 110 Hv$

That is, by controlling an average hardness difference between the base material and the soft portion to a specific value or less, hardenability, durability, and impact resistance at a level equivalent to those of the base material may be ensured.

A carbon content of the base material and a carbon content of the soft portion may satisfy the following Relational Expression 2. As such, by controlling a difference in carbon content between the base material and the soft portion to be small, the average hardness difference between the base material and the soft portion may be reduced.
[Relational Expression 2] $α - β \leq 0.1 wt %$
(where α is the carbon content (wt%) of the base material, and β is the carbon content (wt%) of the soft portion.)

Meanwhile, in the present disclosure, although not particularly limited, as an example, the soft portion may have a width of 10% or less of the thickness of the base material and may include a bond line.

The part may be a wheel rim, but is not limited thereto.

The part is manufactured by subjecting the welded member to post-heat treatment, and the post-heat treatment process may include a normalizing step, an austenitizing step, a quenching step, and a tempering step.

The normalizing step may be performed at 850 to 950°C for 5 to 7 minutes.

The austenitizing step may be performed at 850 to 950°C for 5 to 7 minutes.

The quenching step may be performed at 200°C or lower.

The tempering step may be performed at 150 to 600°C for 30 to 60 minutes.

In the part subjected to the post-heat treatment process, the tensile strength of the base material may be 1,000 MPa to 2,000 MPa, and the tensile strength may be increased as compared with that of the member subjected to flash butt joining. Accordingly, thinning and weight reduction of the part are possible.

### Mode for Invention

Hereinafter, the present disclosure will be described in detail with reference to examples. However, it should be noted that the examples described below are only for illustrating the present disclosure in more detail, and are not intended to limit the scope of the present disclosure. This is because the scope of the present disclosure is determined by the matters recited in the claims and matters reasonably inferred therefrom.

### (Examples)

After preparing base materials satisfying the alloy compositions shown in Table 1, flash butt welded members were manufactured by subjecting the base materials to preheating, flash-heating, upset-heating/flash butt welding, and cooling/post-heating under the conditions shown in Table 2. With respect to the welded members thus manufactured, an average diameter and an aspect ratio of carbides distributed in the welded portion, the inclusion of η-carbide in the welded portion, a kernel average misorientation (KAM) value of the welded portion, a maximum Goss fiber intensity value of the welded portion, an average prior-austenite grain size of a coarse grain heat-affected zone, mechanical properties, hydrogen embrittlement resistance, and the like were measured. The results are shown in Tables 3 and 4. In addition, the manufactured welded members were formed into a component shape and then subjected to post-heat treatment to manufacture parts, and an average hardness of the base material and an average hardness of the soft portion were measured. The results are shown in Table 4.

The average diameter and aspect ratio of the carbides distributed in the welded portion were measured as follows. The welded portion was prepared as a sample in a thin-foil form using an electropolishing apparatus (jet polisher), and the presence of carbides was confirmed through selected area diffraction (SAD or SAED) pattern analysis using a transmission electron microscope (TEM). Through image analysis, a major axis and a minor axis of each carbide distributed in the TEM images were measured, an average value thereof was determined as a diameter of the carbides, and the average diameter of all of the carbides was calculated. In addition, a ratio of the major axis to the minor axis of each of the above-described carbides was determined as an aspect ratio, and the average aspect ratio of all of the carbides was calculated.

The inclusion of η-carbide in the welded portion was confirmed by capturing bright-field and dark-field images using the above-described transmission electron microscope (TEM) and determining whether the unit cell crystal structure was consistent with that of η-carbide through selected area diffraction (SAD or SAED) pattern analysis.

The kernel average misorientation (KAM) value of the welded portion was defined as an average value of differences between an orientation at a certain point and orientations around the point, and was measured using electron backscatter diffraction (EBSD). Here, a point having a higher KAM value indicates a higher dislocation density due to deformation, and in particular, a density of geometrically necessary dislocations (GNDs) is proportional to the KAM value.

The maximum Goss fiber intensity value of the welded portion was measured through electron backscatter diffraction (EBSD), and was defined as a relative volume fraction of grains having a specific orientation of Euler angles (90°, 90°, 45°) in an orientation distribution function (ODF), which is an orientation distribution function of the texture. At this time, the above value was measured in a transverse direction (TD) and a normal direction (ND), and the maximum value thereof was taken.

The average prior-austenite grain size of the coarse grain heat-affected zone of the welded portion was calculated by observing, with a scanning electron microscope (SEM), a microstructure etched with a nital solution to distinguish grain boundaries, measuring a major axis and a minor axis of each grain through image analysis and obtaining an average value thereof, and then calculating an average size of all grains therefrom.

For the welded member, the hardness of each of the base material and the welded portion was determined by measuring Vickers hardness at 0.2 mm intervals under a load of 300 gf, obtaining 1,000 hardness values, and calculating an average value thereof.

In particular, in measuring the hardness of the base material and the welded portion for the part, with respect to the soft portion distributed at the part bond line, the base material and the bond line were distinguished by observing, with a scanning electron microscope (SEM), a microstructure etched with a nital solution, and then, under a load of 200 gf, a minimum of 10 and a maximum of 50 hardness values were measured at 0.2 mm intervals along a thickness direction of the base material over the entire length of the joint, and average hardness values were then calculated and used as the average hardness (H1) of the base material of the heat-treated part and the average hardness (H2) of the soft portion, respectively.

The tensile strength, yield strength, and elongation of the welded portion were measured by a tensile test after a tensile specimen having a width of 1.6 mm, a length of 20 mm, and a thickness of 0.5 mm was taken from the central portion of the welded portion.

The hydrogen embrittlement resistance of the welded portion was measured by collecting a specimen having a width of 30 mm and a length of 180 mm with the welded portion positioned at the center and including the base material, performing four-point bending at 150% or more of the yield strength of the base material, immersing the specimen in a 0.1 N HCl solution for 120 hours, measuring a distribution of cracks generated thereafter by using computed tomography (CT), and then calculating and comparing an average value of crack lengths distributed in the welded portion.

**[Table 1]**

| Base material No. | Alloy composition (wt%) | | | | |
|---|---|---|---|---|---|
| | C | Si | Mn | B | Balance |
| 1 | 0.35 | 0.5 | 1.4 | 0.0095 | Fe |
| 2 | 0.22 | 0.3 | 0.9 | 0.0025 | Fe |
| 3 | 0.31 | 0.6 | 1.2 | 0.0055 | Fe |
| 4 | 0.38 | 0.9 | 1.5 | 0.0030 | Fe |
| 5 | 0.18 | 0.8 | 1.6 | 0.0010 | Fe |

**[Table 2]**

| Classification | Base material No. | Preheating | Flash-heating | | Upset-heating | | Post-heating | |
|---|---|---|---|---|---|---|---|---|
| | | Movement distance between electrodes (mm) | Flash speed (%) | Movement distance between electrodes (mm) | Current relative to short-circuit current (%) | Movement distance between electrodes (mm) | Current relative to short-circuit current (%) | Time (sec) |
| Inventive Example 1 | 1 | 1.0 | 20 | 2.0 | 20 | 2.0 | 10 | 0.5 |
| Inventive Example 2 | 2 | 3.5 | 15 | 4.0 | 30 | 4.0 | 15 | 1.0 |
| Inventive Example 3 | 3 | 4.0 | 10 | 4.5 | 35 | 4.5 | 5 | 2.0 |
| Inventive Example 4 | 4 | 5.0 | 25 | 5.0 | 40 | 10.0 | 10 | 1.5 |
| Inventive Example 5 | 5 | 12.0 | 5 | 6.0 | 35 | 15.0 | 25 | 2.5 |
| Comparative Example 1 | 1 | 1.0 | 20 | 2.0 | 10 | 2.0 | 10 | 0.4 |
| Comparative Example 2 | 2 | 3.5 | 15 | 4.0 | 30 | 4.0 | 30 | 0.5 |
| Comparative Example 3 | 3 | 4.0 | 30 | 4.5 | 35 | 4.5 | 5 | 2.0 |
| Comparative Example 4 | 4 | 13.0 | 25 | 5.0 | 40 | 10.0 | 10 | 1.5 |
| Comparative Example 5 | 5 | 12.0 | 5 | 7.0 | 35 | 15.0 | 25 | 2.5 |
| Comparative Example 6 | 1 | 1.0 | 20 | 2.0 | 20 | 2.0 | - | - |
| Comparative Example 7 | 2 | 3.5 | 15 | 4.0 | 50 | 4.0 | 15 | 1.0 |
| Comparative Example 8 | 3 | 4.0 | 10 | 1.5 | 35 | 4.5 | 5 | 2.0 |
| Comparative Example 9 | 4 | 5.0 | 3 | 5.0 | 40 | 10.0 | 10 | 1.5 |
| Comparative Example 10 | 5 | 12.0 | 5 | 6.0 | 35 | 17.0 | 25 | 2.5 |
| Comparative Example 11 | 1 | 1.0 | 20 | 2.0 | 20 | 2.0 | 27 | 0.1 |
| Comparative Example 12 | 2 | 3.5 | 35 | 1.5 | 30 | 4.0 | 15 | 1.0 |
| Comparative Example 13 | 3 | 4.0 | 10 | 4.5 | 15 | 1.8 | 5 | 2.0 |
| Comparative Example 14 | 4 | 12.5 | 2 | 5.0 | 40 | 10.0 | 10 | 1.5 |
| Comparative Example 15 | 5 | 12.0 | 5 | 8.5 | 35 | 15.0 | 25 | 2.7 |

(In Table 2, the current ratio of flash-heating to the short-circuit current was fixed at 55%.)

**[Table 3]**

| Classification | Base material No. | Average diameter of carbides (nm) | Aspect ratio of carbides | Inclusion of η-carbide | KAM value | Maximum Goss fiber intensity value | Average prior-austenite grain size of coarse grain heat-affected zone (µm) |
|---|---|---|---|---|---|---|---|
| Inventive Example 1 | 1 | 105 | 1.5 | ○ | 2.5 | 10.0 | 20.0 |
| Inventive Example 2 | 2 | 130 | 1.8 | ○ | 2.1 | 7.4 | 26.5 |
| Inventive Example 3 | 3 | 147 | 2.2 | ○ | 1.8 | 7.2 | 28.2 |
| Inventive Example 4 | 4 | 154 | 2.0 | ○ | 1.9 | 6.7 | 30.2 |
| Inventive Example 5 | 5 | 178 | 2.5 | ○ | 1.6 | 6.1 | 32.6 |
| Comparative Example 1 | 1 | 94 | 1.3 | × | 2.7 | 11.3 | 18.7 |
| Comparative Example 2 | 2 | 187 | 3.3 | ○ | 1.7 | 6.9 | 32.5 |
| Comparative Example 3 | 3 | 144 | 2.1 | ○ | 2.6 | 8.6 | 27.1 |
| Comparative Example 4 | 4 | 226 | 3.5 | × | 1.4 | 6.5 | 33.4 |
| Comparative Example 5 | 5 | 182 | 2.7 | ○ | 1.5 | 5.9 | 33.5 |
| Comparative Example 6 | 1 | 87 | 1.1 | × | 2.9 | 12.3 | 17.7 |
| Comparative Example 7 | 2 | 181 | 2.3 | ○ | 2.0 | 7.1 | 28.9 |
| Comparative Example 8 | 3 | 137 | 1.9 | ○ | 2.7 | 8.8 | 26.5 |
| Comparative Example 9 | 4 | 218 | 3.2 | × | 1.6 | 6.7 | 32.8 |
| Comparative Example 10 | 5 | 180 | 2.6 | ○ | 1.7 | 6.3 | 33.1 |
| Comparative Example 11 | 1 | 91 | 1.2 | × | 2.8 | 11.9 | 18.2 |
| Comparative Example 12 | 2 | 124 | 1.6 | ○ | 2.6 | 9.8 | 24.3 |
| Comparative Example 13 | 3 | 155 | 2.6 | ○ | 2.2 | 8.1 | 27.5 |
| Comparative Example 14 | 4 | 237 | 3.8 | × | 1.2 | 6.2 | 35.2 |
| Comparative Example 15 | 5 | 241 | 4.3 | ○ | 1.0 | 5.7 | 37.3 |

**[Table 4]**

| Classification | Base | Welded member | | | | | | Part | | |
|---|---|---|---|---|---|---|---|---|---|---|
| | material No. | Thickness (mm) | Average hardness of welded portion (Hv) | Tensile strength of welded portion (MPa) | Yield strength of welded portion (MPa) | Elongation of welded portion (%) | Average length of cracks (µm) | Average hardness of base material (H1) (Hv) | Average hardness of soft portion (H2) (Hv) | H1-H2 |
| Inventive Example 1 | 1 | 2.4 | 400 | 1200 | 620 | 4.0 | 310 | 610 | 595 | 15 |
| Inventive Example 2 | 2 | 3.2 | 355 | 1050 | 610 | 4.2 | 305 | 580 | 547 | 33 |
| Inventive Example 3 | 3 | 4.5 | 315 | 940 | 585 | 4.5 | 301 | 550 | 475 | 75 |
| Inventive Example 4 | 4 | 11.0 | 305 | 915 | 562 | 4.6 | 298 | 532 | 433 | 99 |
| Inventive Example 5 | 5 | 18.0 | 201 | 603 | 493 | 6.7 | 104 | 502 | 392 | 110 |
| Comparative Example 1 | 1 | 2.4 | 412 | 1237 | 636 | 3.9 | 317 | - | - | - |
| Comparative Example 2 | 2 | 3.2 | 329 | 986 | 593 | 4.3 | 312 | - | - | - |
| Comparative Example 3 | 3 | 4.5 | 317 | 952 | 591 | 4.4 | 311 | - | - | - |
| Comparative Example 4 | 4 | 11.0 | 299 | 897 | 554 | 4.7 | 324 | 532 | 419 | 113 |
| Comparative Example 5 | 5 | 18.0 | 198 | 594 | 491 | 6.8 | 115 | 502 | 388 | 114 |
| Comparative Example 6 | 1 | 2.4 | 414 | 1243 | 624 | 3.7 | 319 | - | - | - |
| Comparative Example 7 | 2 | 3.2 | 345 | 1036 | 598 | 4.3 | 313 | - | - | - |
| Comparative Example 8 | 3 | 4.5 | 320 | 959 | 595 | 4.1 | 314 | - | - | - |
| Comparative Example 9 | 4 | 11.0 | 301 | 902 | 560 | 4.4 | 321 | 532 | 421 | 111 |
| Comparative Example 10 | 5 | 18.0 | 199 | 601 | 496 | 6.6 | 117 | 502 | 390 | 112 |
| Comparative Example 11 | 1 | 2.4 | 413 | 1239 | 630 | 3.8 | 318 | - | - | - |
| Comparative Example 12 | 2 | 3.2 | 359 | 1077 | 614 | 3.9 | 315 | - | - | - |
| Comparative Example 13 | 3 | 4.5 | 316 | 948 | 589 | 4.3 | 312 | - | - | - |
| Comparative Example 14 | 4 | 11.0 | 295 | 884 | 546 | 4.8 | 321 | - | - | - |
| Comparative Example 15 | 5 | 18.0 | 194 | 582 | 488 | 6.7 | 334 | - | - | - |

(In Table 4, "-" indicates a case in which a crack defect occurred in the welded portion during forming after flash butt welding or after forming, and thus manufacture of a final part could not proceed and measurement could not be performed.)

FIG. 1 exhibits results obtained by capturing bright-field and dark-field images of Inventive Example 2 using a transmission electron microscope (TEM) and confirming, through selected area diffraction (SAD or SAED) pattern analysis, that the unit cell crystal structure is consistent with that of η-carbide that is a metastable carbide.

FIG. 2 exhibits results obtained by capturing a bright-field image of Comparative Example 2 using a transmission electron microscope (TEM) and confirming, through selected area diffraction (SAD or SAED) pattern analysis, that the unit cell crystal structure is consistent with those of cementite and η-carbide that is a metastable carbide.

FIG. 3 is an image showing, for Inventive Example 2 before post-heat treatment, a cross-sectional optical micrograph after hardness measurement of a flash butt welded portion including a steel sheet base material, and a hardness distribution corresponding to a rectangular box region represented by color differences.

FIG. 4 is an image showing Goss fiber intensity measured in a transverse direction (TD) of the flash butt welded portions of Comparative Example 2 (left) and Inventive Example 2 (right) before post-heat treatment.

As can be seen from FIGS. 1 to 4 and Tables 1 to 4, in Inventive Examples 1 to 5, which satisfied the alloy composition and manufacturing conditions proposed in the present disclosure, the average diameter and aspect ratio of carbides distributed in the welded portion, the inclusion of η-carbide in the welded portion, the kernel average misorientation (KAM) value of the welded portion, the maximum Goss fiber intensity value of the welded portion, and the average prior-austenite grain size of the coarse grain heat-affected zone proposed in the present disclosure were achieved, and as a result, excellent mechanical properties and hydrogen embrittlement resistance were exhibited.

In the case of Comparative Example 1, which did not satisfy the upset-heating current and post-heating time proposed in the present disclosure, it was found that the mechanical properties and hydrogen embrittlement resistance were at insufficient levels because the inclusion of η-carbide in the welded portion, the kernel average misorientation (KAM) value of the welded portion, the maximum Goss fiber intensity value of the welded portion, and the average prior-austenite grain size of the coarse grain heat-affected zone did not satisfy those proposed in the present disclosure.

In the case of Comparative Example 2, which did not satisfy the post-heating current proposed in the present disclosure, it was found that the hydrogen embrittlement resistance was at an insufficient level because the average diameter and aspect ratio of carbides distributed in the welded portion did not satisfy those proposed in the present disclosure. In addition, manufacture of a component was not possible.

In the case of Comparative Example 3, which did not satisfy the flash speed proposed in the present disclosure, it was found that the hydrogen embrittlement resistance was at an insufficient level because the kernel average misorientation (KAM) value of the welded portion did not satisfy that proposed in the present disclosure. In addition, manufacture of a component was not possible.

In the case of Comparative Example 4, which did not satisfy the movement distance between the electrodes during the preheating proposed in the present disclosure, it was found that the hydrogen embrittlement resistance was at an insufficient level because the average diameter and aspect ratio of carbides distributed in the welded portion and the inclusion of η-carbide in the welded portion did not satisfy those proposed in the present disclosure. In addition, it was found that H1-H2 of the part exceeded 110 Hv.

In the case of Comparative Example 5, which did not satisfy the movement distance between the electrodes during the flash-heating proposed in the present disclosure, it was found that the average hardness of the welded portion was at an insufficient level because the average diameter and aspect ratio of carbides did not satisfy those proposed in the present disclosure. In addition, it was found that H1-H2 of the part exceeded 110 Hv.

In the case of Comparative Example 6, which was not subjected to the post-heating treatment proposed in the present disclosure, it was found that the mechanical properties and hydrogen embrittlement resistance were at insufficient levels because the inclusion of η-carbide, the kernel average misorientation (KAM) value of the welded portion, the maximum Goss fiber intensity value of the welded portion, and the average prior-austenite grain size of the coarse grain heat-affected zone did not satisfy those proposed in the present disclosure. In addition, manufacture of a component was not possible.

In the case of Comparative Example 7, which did not satisfy the movement distance between the electrodes during the upset-heating proposed in the present disclosure, it was found that the hydrogen embrittlement resistance was at an insufficient level because the average diameter of the carbides did not satisfy that proposed in the present disclosure. In addition, manufacture of a component was not possible.

In the case of Comparative Example 8, which did not satisfy the movement distance between the electrodes during the flash-heating proposed in the present disclosure, it was found that the hydrogen embrittlement resistance was at an insufficient level because the kernel average misorientation (KAM) value of the welded portion did not satisfy that proposed in the present disclosure. In addition, manufacture of a component was not possible.

In the case of Comparative Example 9, which did not satisfy the flash speed proposed in the present disclosure, it was found that the hydrogen embrittlement resistance was at an insufficient level because the average diameter and aspect ratio of the carbides distributed in the welded portion and the inclusion of η-carbide in the welded portion did not satisfy those proposed in the present disclosure. In addition, it was found that H1-H2 of the part exceeded 110 Hv.

In the case of Comparative Example 10, which did not satisfy the movement distance between the electrodes during the upset-heating proposed in the present disclosure, it was found that the average hardness of the welded portion was at an insufficient level because the average diameter and aspect ratio of the carbides did not satisfy those proposed in the present disclosure. In addition, manufacture of a component was not possible.

In the case of Comparative Example 11, which did not satisfy the current and time of the post-heating treatment proposed in the present disclosure, it was found that the mechanical properties and hydrogen embrittlement resistance were at insufficient levels because the inclusion of η-carbide in the welded portion, the kernel average misorientation (KAM) value of the welded portion, the maximum Goss fiber intensity value of the welded portion, and the average prior-austenite grain size of the coarse grain heat-affected zone did not satisfy those proposed in the present disclosure. In addition, manufacture of a component was not possible.

In the case of Comparative Example 12, which did not satisfy the flash speed and the movement distance between the electrodes during the flash-heating proposed in the present disclosure, it was found that the hydrogen embrittlement resistance was at an insufficient level because the kernel average misorientation (KAM) value of the welded portion did not satisfy that proposed in the present disclosure. In addition, manufacture of a component was not possible.

In the case of Comparative Example 13, which did not satisfy the current during the upset-heating and the movement distance between the electrodes proposed in the present disclosure, it was found that the hydrogen embrittlement resistance was at an insufficient level because the aspect ratio of the carbides did not satisfy that proposed in the present disclosure. In addition, manufacture of a component was not possible.

In the case of Comparative Example 14, which did not satisfy the movement distance between the electrodes during the preheating and the flash speed proposed in the present disclosure, it was found that the hydrogen embrittlement resistance was at an insufficient level because the average diameter and aspect ratio of the carbides and the inclusion of η-carbide in the welded portion did not satisfy those proposed in the present disclosure. In addition, manufacture of a component was not possible.

In the case of Comparative Example 15, which did not satisfy the movement distance between the electrodes during the flash-heating and the time of the post-heating treatment proposed in the present disclosure, it was found that the average hardness of the welded portion and the hydrogen embrittlement resistance were at insufficient levels because the average diameter and aspect ratio of the carbides did not satisfy those proposed in the present disclosure. In addition, manufacture of a component was not possible.

## Claims

1. A flash butt welded member comprising:
a base material; and
a welded portion obtained by flash butt welding the base material,
wherein the base material contains, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities,
carbides distributed in the welded portion have an average diameter of 180 nm or less and an aspect ratio of 2.5 or less, and
the welded portion has a kernel average misorientation (KAM) value of 2.50 or less.

2. The flash butt welded member of claim 1, wherein the welded portion contains η-carbide that is a metastable carbide.

3. The flash butt welded member of claim 1, wherein the welded portion has a maximum Goss fiber intensity value of 10.0 or less.

4. The flash butt welded member of claim 1, wherein the welded portion includes a coarse grain heat-affected zone formed at a central portion in a width direction and a fine grain heat-affected zone formed to surround the coarse grain heat-affected zone, and
the coarse grain heat-affected zone has an average prior-austenite grain size of 20 µm or more.

5. The flash butt welded member of claim 1, wherein the welded member has a thickness of 2 to 20 mm.

6. The flash butt welded member of claim 1, wherein the welded portion has an average hardness of 200 to 400 Hv.

7. The flash butt welded member of claim 1, wherein the welded portion has a tensile strength of 1,200 MPa or less and a yield strength of 620 MPa or less.

8. The flash butt welded member of claim 1, wherein the welded portion has an elongation of 4.0% or more.

9. The flash butt welded member of claim 1, wherein the welded portion has an average length of cracks of 310 µm or less, the cracks being generated after four-point bending at 150% or more of a yield strength of the base material and immersion in a 0.1 N HCl solution for 120 hours.

10. A flash butt welding method comprising:
preparing a base material containing, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities;
preheating a surface to be welded, of the base material, so that a movement distance between electrodes is 1.0 to 12.0 mm;
flash-heating the preheated surface to be welded so that a flash speed is 5 to 25% and the movement distance between the electrodes is 2.0 to 6.0 mm;
upset-heating the flash-heated surface to be welded so that a current is 20 to 40% of a short-circuit current and the movement distance between the electrodes is 2.0 to 16.0 mm, and forming a welded portion by flash butt welding; and
after cooling the welded portion, post-heating the cooled welded portion for 0.5 to 2.5 seconds with a current of 5 to 25% of the short-circuit current.

11. A component comprising:
a base material containing, by wt%, 0.180 to 0.40% of C, 1.0% or less of Si (excluding 0%), 1.60% or less of Mn (excluding 0%), 0.010% or less of B (excluding 0%), and a balance of Fe and unavoidable impurities; and
a welded portion obtained by flash butt welding the base material and then subjecting the flash butt-welded base material to post-heat treatment,
wherein the welded portion includes a soft portion formed in a thickness direction, and
an average hardness (H1) of the base material and an average hardness (H2) of the soft portion satisfy the following Relational Expression 1: [Relational Expression 1] $H 1 - H 2 \leq 110 Hv .$

12. The part of claim 11, wherein a carbon content of the base material and a carbon content of the soft portion satisfy the following Relational Expression 2: [Relational Expression 2] $α - β \leq 0.1 wt %$ where α is the carbon content (wt%) of the base material, and β is the carbon content (wt%) of the soft portion.

13. The part of claim 11, wherein the base material has a tensile strength of 1,000 to 2,000 MPa.

14. The part of claim 11, wherein the soft portion has a width of 10% or less of a thickness of the base material.
